# EUROPEAN PATENT SPECIFICATION

(11) **EP 3 578 040 B1**
(45) Date of publication and mention of the grant of the patent: **20.03.2024**
(21) Application number: 19000213.9
(22) Date of filing: 03.05.2019
(51) Int. Cl.: A01K 5/01

(54) **FEEDING DEVICE AND METHOD**
FÜTTERUNGSEINRICHTUNG UND VERFAHREN
DISPOSITIF ET PROCÉDÉ D'ALIMENTATION

(30) Priority: 04.05.2018 GB 201807414
(43) Date of publication of application: 11.12.2019
(73) Proprietor: Mars, Incorporated, McLean, VA 22101 (US)
(72) Inventor: KING, Tammie, Leicestershire LE14 4RT (GB); HUNT, Alysia, Leicestershire LE14 4RT (GB); MARSHALL, Emily, Leicestershire LE14 4RT (GB); JONES, Lewis, Irchester, Northhamptonshire NN29 7DZ (GB)
(74) Representative: Cabinet Nony

(56) References cited:
- CN-U- 205 030 319
- DE-C1- 3 306 836
- KR-A- 20120 065 465
- US-A1- 2011 180 006
- US-B2- 9 545 081

## Description

### TECHNICAL FIELD

The present invention relates to a device and method for feeding animals, and in particular for carrying out testing in relation to animal odour preferences, especially the odour preferences of companion animals such as cats or dogs.

### BACKGROUND

Information regarding preferences and in particular odour preferences for animals and in particular companion animals such as cats and dogs, are important in developing products that will appeal to them. This may include food products which are appealing to the animals. If an animal is not attracted to the food supplied to It, it may not consume sufficient amounts to maintain health or well-being, or the food may be wasted or left unconsumed for extended periods of time, causing the food to become stale or contaminated. Cats in particular, can be particularly fastidious eaters.

Odour plays a role, along with taste, in an individual animal's preference or aversion to a food type. Odour is the primary cue in attracting an animal to a food source or causing it to not approach. As a result, it would be very useful to develop robust and reliable methods for determining which odours are attractive or repellant to particular animals, in order to facilitate development of products targeted at such animals. These may include food or toys intended to attract the animal, or products intended to exert an animal repellent effect, for example to control areas where animals may be discouraged from visiting, such as flower beds or gardens.

It is known that most animals are able to distinguish one odour from another. However, it is only possible to assess attractiveness of a particular odour to an animal using behavioural tests. Such tests can be challenging to perform and the results may be difficult to Interpret. Obviously, the majority of non-human animals can't verbalise their preference, and it is not possible to ascertain how an animal actually feels, but rely instead on displays of behaviour and/or other related variables. Behavioural scientists therefore have to infer emotions through observing behaviour, along with other measures.

Experimental design is paramount to ascertain what responses may mean. This is however, not simple. Delivery of an odour In a controlled and physically specific manner is not straightforward and may require complex equipment and ventilation systems.

Furthermore, simple observation methods to determine if an animal such as a cat is physically attracted towards or repelled by a particular odour requires careful data capture and interpretation by trained observers, as reactions will be variable from animal to animal and the accuracy of observer responses may differ.

Other behavioural tests train a population of animals such as cats, to respond in a particular way, to the presence of desirable odours. This may include requiring the animal to perform a particular measurable action, such as displaying a learned behavior (e.g. activating a lever), in response to an odour. However again, such tests are complex both to set up and the results may be subject to variation across populations or amongst individuals. Furthermore, conditioning an animal to respond in a certain manner to a particular odour introduces a bias which may not be associating to true "liking" of an odourant but the animal simply engages with the odour in anticipation of a reward. Therefore, a method that does not require specific training would be of benefit.

Furthermore, capturing multiple measures may be necessary to reach a sound conclusion and detailed analysis of behavioural and physiological variables is crucial.

It would be useful to develop a valid and reliable method which evaluates odour preference of animals, with an appropriate odour delivery system and a means of readily measuring resultant behaviour in an animal.

WO2017/082987 describes an animal food bowl system, designed to encourage an animal to feed a healthy diet by allowing attractive aroma-producing materials, such as heated meat, to be positioned below the animal's food. Aromas from the material are able to permeate up through the food by way of perforations in the lower surface of the feeding bowl and therefore may enhance the attractiveness of the food to the animal.

US9545081 discloses a feeding device comprising an inner chamber containing a scent distribution module comprising a scent tray surrounding a fan and supporting odourant material. The scent tray is not configured to have side walls and an upper surface which may surround odourant materials.

DE3306836 discloses interlocked inner and outer containers forming an inner chamber containing a support impregnated with a fragrance.

KR20120065465 discloses a feeding bowl which can comprise an inner chamber formed between an outer container and an inner feeding bowl in which an odourant material can be positioned.

CN205030319 discloses a feeding device comprised of a little box body intended to contain food fitted with a large box body intended to contain.

US2011180006 discloses a bowl intended to contain food and positioned within a cylindrical member defining together a receiving chamber.

In addition, C. Pétel et al. J. Sens. Stud. 2018, 33:e12311 describes a method for assessing the influence of odour on food selection in dogs, which utilises a false bottom bowl. In this work, dogs were subjected to a paired comparison test, using two false bottomed bowls. Each bowl comprised a conventional feeding bowl, into which a stainless-steel separation plate having drilled holes arranged across the entire surface was placed. This separated the bowls into an upper and lower compartment. Different odourant materials were then placed into each lower compartment, and similar amounts of food material placed in each upper compartment. The odour from the lower compartment passed through the drilled holes and through the food layer, and thus influenced a dog's selection of bowl to eat from.

In either case, the odour from the odourant material mingles intimately with the natural aroma of the food layer. When this happens, the overall odour is likely to be modified, either by simple mixing or even by chemical reactions. Therefore, it is difficult to relate the attractiveness directly and solely to the odourant material.

Furthermore, such devices can only be used with essentially dry food products such as kibbles or treats, as liquids from wet foods may drip or leak through the perforations in the bowl and so contaminate the aroma-producing substance. Since some animals may prefer the texture of wet food, this provides a limitation on the use of the devices.

The applicants have developed a new apparatus and method which provides a means of assessing odour attractiveness of particular substances to animals, in an efficient and measurable manner. This may include requiring the animal to perform a particular measurable action, such as displaying a learned behaviour, in response to an odour.

### SUMMARY OF THE INVENTION

According to the present disclosure there is provided a device comprising an outer container; an inner feeding bowl for containing animal food, the inner feeding bowl having side walls and a solid base and being accommodatable in said outer container; an odour chamber (or test chamber) for holding odourant material arranged below the inner feeding bowl within the outer container; and a vent arranged to allow odours from the chamber to exit the device between the outer container and the side walls of the inner feeding bowl.

The present invention provided a device comprising: an outer container (1); an inner feeding bowl (2) for containing food to be consumed by an animal, the inner feeding bowl (2) having side walls and a solid base (3) and being accommodatable in said outer container (1); an odour chamber for holding odourant material (9) arranged below the inner feeding bowl (2) within the outer container (1); and a vent arranged to allow odours from the chamber to exit the device between the outer container (1) and the side walls of the inner feeding bowl (2); wherein the odour chamber comprises a separating module (4), arranged to fit between the base of the inner feeding bowl (2) and the outer container (1); the separating module (4) comprising side walls and an upper surface defining a cavity (5), for surrounding an odourant material (9), wherein at least one opening (6) is provided in the separating module (4).

In certain embodiments, the device is for use in animal testing, for example in the testing of the attracting or repelling properties of particular odourant materials. This may include requiring the animal to perform a particular measurable action, such as displaying a learned behaviour, in response to an odour. In other embodiments the device is for feeding animals in a domestic setting.

The device of the present invention can be used with all types of food formats, including wet and dry foods, since the inner feeding bowl has a solid base and so there will be no leakage. As used herein, the term 'vent' refers to any form of gap, channel, passage or combination of more than one of these, though which gas and in particular air, may flow. The vent preferably provides fluid communication between the odour chamber and an odour exit defined by a space between the outer container and the side walls of the inner feeding bowl, to enable odours to travel therethrough.

Furthermore, the vent is arranged so that odours from the odourant material do not pass through food but rather are directed around the outside of the feeding bowl. As a result, they do not become intimately mixed with aromas or other components from the food material itself. In fact, the odours are directed around the edges of the feeding bowl and therefore they will potentially be encountered before the aromas from the food material by an approaching animal. Therefore, the attractiveness or otherwise of the odourant material, as determined for example by behavioural responses, may be more reliably attributed to the odourant material.

In a particular embodiment, the vent is arranged to direct odours around substantially the entire bowl, so as to provide a 'curtain' of odour around the bowl. In this way, an animal will encounter the odour irrespective of the direction of approach to the bowl. For example, the vent may comprise one or more individual gaps, channels or passages, which may be are provided spaced around the rim of the inner feeding bowl.

However, in a particular embodiment, the vent comprises a gap arranged between outer container and the side walls of the inner feeding bowl which gap extents around the entire rim of the inner feeding bowl. This provides simple and effective design options. In particular, the outer container and the inner feeding bowl are of similar shape, but the cross-sectional area of the inner feeding bowl is smaller than that of the outer container, so that it may sit concentrically within the outer container, leaving a gap between the inner surface of the wall of the outer container and the outer surface of the wall of the inner feeding bowl. The gap is optionally of essentially constant width therebetween.

The size of the vent such as the gap will be sufficient to allow odour to emanate freely from it. However, it is suitably not too wide, as this may allow an animal such as a cat, to try to disturb the device, by putting claws, nose or paws into the vent. Furthermore, too large a gap between the outer container and the inner feeding bowl may allow relative movement of the inner feeding bowl within the outer container during use, which may disturb the animal. Suitably the vent, such as the gap between the inner bowl and the outer container in the device will be from 1-12mm, for example, from 2-10mm such as about 7mm.

The outer container and inner feeding bowl may be of any convenient cross-sectional shape. Thus, for example, they may be round, square or rectangular in cross-section. In a particular embodiment, the outer container will be shaped to fit into a test rig, for example, a rig arranged to monitor the weight the device to determine food consumption, and/or to monitor the movement or activity of an animal in relation to the device. In such cases, it may be preferable to provide edges so that the device can be accurately positioned and held in place in the test rig, and so square or rectangular containers may be most suitable.

The relative height of the inner feeding bowl and the outer container will suitably be selected so that the top of the inner bowl is approximately level with the top of the outer container when it is in position in the device of the invention, taking account the presence of the odour chamber. This ensures that the outer container does not act as a barrier to discourage the animal from feeding from the inner bowl and also the odour emanating from the gap is concentrated in the area of the animal's head and not unduly dissipated.

The odour chamber may be integral with the outer container or inner feeding bowl, or may be defined by a separating module configured to fit between the outer container and inner feeding bowl. The odour chamber may comprise side walls and upper and/or lower surfaces defining a cavity, which may surround an odorant material, wherein at least one opening is provided therein to permit egress of odour from the cavity to the vent. The vent may comprise one or more channels extending between the opening of the odour cavity and the gap between the outer container and the side walls of the inner feeding bowl. Thus, the one or more channels can convey odours from an odorant material within the cavity to the gap. In some instances, a plurality of such channels are provided, the channels being distributed so that they each extend between the cavity and a different location around the gap, preferably evenly distributed different locations around the gap. The channels may thus be arranged to allow even distribution of odours from the cavity of the separate module to the vent, around substantially the entire circumference of the vent/gap.

The odour chamber is provided in a separating module, the one or more channels may be provided in the upper surface of the separating module so that the separating module and the base of the inner feeding bowl together define the one or more channels. In embodiments with a plurality of channels, each channel may lead to different points around the edge of the separate module as described above.

The odour chamber may be defined by the introduction of the inner feeding bowl into the outer container. For example, the inner feeding bowl may be provided with downwardly projecting support members such as supports or legs, which prevent the solid base from reaching the base of the outer container, or the outer container may be provided with inwardly directed projections which engage the base of the inner bowl before it reaches the base of the outer container. In this way, when the inner bowl is in position within the outer container, there will be a cavity below the base of the inner feeding bowl. Odourant material under test may be introduced into this cavity before the inner feeding bowl is introduced. There should be opening(s) in or between any such support members so that odours exiting the cavity may be vented through the vent as described above. In embodiments in which the vent comprises one or more channels extending between the odour cavity and the gap between the outer container and the side walls of the inner feeding bowl, the one or more channels may extend from such opening(s) in or between such support members.

The odour chamber comprises a separating module, arranged to fit between the base of the inner feeding bowl and the outer container of the device. The separating module comprises at least side walls and an upper surface defining a cavity, which surrounds an odourant material, wherein at least one opening is provided in the separating module. The one or more openings may be provided in the side walls, which would allow odours out of the separating module and into the vent such as the gap, as described above.

However, in a particular embodiment, the separating module is provided with an opening in the upper surface, and wherein at least one channel extends from said opening to an edge region of the upper surface of the separating module to link with the vent such as the gap, as described above. The opening may alternatively comprise a recess or other feature that is generally centrally-positioned in the separating module, and from which the at least one channel extends.

This embodiment is particularly effective as the opening has the effect of concentrating the upwardly mobile odours and directing them into the vent such as the gap. In use, an odourant material is located within the inner space of the separating module, and this is positioned on a base of the outer container. The inner bowl is then positioned on top of the separating module. Vapour and odours from the odourant material emanates from the separating module, through the hole in the upper surface of the separating module. These abut the base of the inner bowl, and are diverted to the edge of the separating module along the at least one channel and into the gap between the inner bowl and outer container. As a result, odour is emitted specifically through the gap between the inner bowl and outer container. Suitably, a plurality of channels are provided in the upper surface of the separating module, each channel being arranged to direct to different points around the edge of the separating module. In particular, from 2-12 channels are provided in the upper surface of the separating module, for example about 8 channels. These are suitably arranged to allow even distribution of odours into the gap around the entire circumference of the inner bowl and outer container.

The device of the invention is modular in nature and so the inner feeding bowl, the outer container and the separating module may be assembled for use in situ and readily disassembled for washing after use. In other embodiments one or more of the inner feeding bowl, outer container and separating module may be formed integrally with one another so that they provide a unitary part. For example, the inner feeding bowl and separating module may be formed integrally with one another.

In one embodiment, the separating module further comprises a lower surface so as to provide a discrete holder for the odourant material. In this case, the odourant material may be positioned in the separating module, for example, by adding it through the opening in the upper surface, before the separating module is placed in the outer container. The inner bowl is then positioned on the separating module subsequently, so as to cover the upper surface of the separating module and thus close the opening, ensuring that odour is directed along the channel(s).

In a different embodiment, the separating module has no lower surface, or has an opening in the lower surface. In this case, the odourant material is placed on a central region of the base of the outer container and the separating module placed over it, so that the odourant material is then enclosed within the inner cavity of the separating module. In this embodiment, the inner bowl is suitably fixed in position on top of the separating module, for example using fixing means such as tacks, nails, screws or adhesives. Alternatively, the separating module may be formed in an integral manner with the inner feeding bowl.

The opening in the upper surface of the separating module should be of a suitable size to allow for odours to escape therethrough. Where the separating module also forms a discrete container as described above, it should be sufficiently large to allow the odorant substance to be Introduced into the separating module. However, it should be small enough to ensure that it is completely covered and effectively closed by the addition of the inner bowl onto the surface thereof. Typically, the opening will be from 1-10, in particular from 2-6cm across.

The or each channel is suitably moulded into the upper surface of the separating module and will be deep enough to allow gases and particularly odours to travel along the channels into the gap such as the gap between the inner bowl and the outer container. The depth will be constrained by the thickness of the upper surface of the separating module. Typically, the or each channel will be from 0.5-1.5cm wide, for example about 1cm wide, and up to 1cm deep, for example up to 0.5 cm deep.

Although only one opening may be needed in the upper surface of the separating module, additional openings can be provided if required, in which case, channels may extend from each of these to the edge region of the separating module. In this case however, the arrangement of the openings should be such that they are all effectively covered by the inner bowl when it is in position on the separating module in the device of the invention.

The size of the inner feeding bowl will vary depending upon the type of animal being assessed. For domestic cats for instance the bowls may be from 8-20cm across, whilst for dogs, larger bowls for example, from 10-30cm across may be more suitable.

The outer container, inner feeding bowl and, where present, the separating module may be made of any suitable rigid material. This includes plastics such as polyethylene, polypropylene, polyoxymethylene or co-polymers Including acetals, for instance Natural Acetal or metals or metal alloys such as stainless steel. However, the material should not react with food, or with any odourant material or odours which it is likely to come into contact with and so it should be relatively chemically Inert. Furthermore, it should be easy to clean, as well as non-toxic and so safe in the event that it is chewed by an animal, such as a cat or dog, using It.

Furthermore, the weight of the device and in particular the size to weight ratio should be such that it cannot be easily overturned or disrupted by a test animal. This will vary depending upon factors such as the type of animal used in the test. However, typically for cats, the overall weight of the device should be in the range of 200g-2kg, such as from 200g-300g with a size to weight ratio in the range from 1:25 to 1:2.5. For a dog, the overall weight of the device is suitably in the range of 1-5kg with a size to weight ratio in the range from 1:20 to 1:4.

Food may be placed in the inner bowl and made available for consumption by an animal, such as a cat or dog, but in particular a cat. The animal will detect the odour emanating around the side of the food and be attracted or otherwise to the bowl as a result. They may then consume the food and the amount of food consumed may provide a measure of the attractiveness of the odour to the animal, and therefore its willingness to remain within the ambit of the odour.

The device provided is expected to be useful in assessing the attractiveness of an odourant material to an animal, and so, methods of using the device for this purpose are also provided. The methods comprise: providing a device comprising an outer container, and inner feeding bowl, an odour chamber operably disposed relative to the inner feeding bowl and outer container and having a vent fluidly connecting the odour chamber with a vent arranged to allow odours from the chamber to exit the device between the outer container and the side walls of the inner feeding bowl; placing an odorant material in the test chamber of device according to any one of the preceding claims; placing food in the inner bowl; allowing an animal to access the bowl; and assessing a reaction of the animal. In some instances, a reaction of an animal to an odour may be assessed, e.g. by placing a known amount of food in the inner feeding bowl, allowing the animal access to the device, and measuring the amount of food eaten by the animal.

Thus, in a further aspect, the invention provides a method for testing the attractiveness of an odourant material to an animal, said method comprising placing the odourant material in the odour chamber of a device of the invention as described above, placing food in the inner bowl, allowing an animal to access the bowl, and assessing a reaction of the animal. Reactions may be assessed by visually monitoring or recording the animal during its access to the device. The reactions assessed may be on the macro level, such as by observing behavioural gestures such as movement towards the food, or on the micro level, such as by monitoring eye movements, pupil dilation or other physiological variables such as changes heart rate, respiration and body temperature. In some instances, pet tracking devices, such as Whistle^{™} activity monitors, or PetPace^{™} collars may be employed in the assessment process.

However, in a particular embodiment, a known amount of food is placed in the inner bowl and the amount of food eaten by the animal is determined to assess the reaction. Suitably, the device is assembled and the odorant substance added within 15 minutes, in particular within 10 or 5 minutes of the animal being given access to it, so that the odour from the odourant material has not dissipated too far from the device. In particular, device is assembled and the odorant material added immediately prior to the animal given access to It.

The type of food used in the method of the invention will vary depending upon the animal under test. It may comprise a dry type food such as a kibble or treats, but also wet foods such as chunks In jelly, chunks in gravy or loaf products, since the base of the inner bowl is solid and will not allow leaks. In some instances, it may be appropriate to select a food material which is not highly odourant or volatile in its own right. This will allow any reaction from the animal to be reliably attributed to the odourant material in its own right. However, this may not necessarily be the case, for example, if it is required to test whether a particular odourant material will modify the response to a particular foodstuff, which may Itself have a significant odour.

The method and device of the invention will allow reliable assessments of the effects of particular odourant material on the animals to be assessed. As a result, this provides a useful tool for the development of products such as animal foods, which are required to be attractive to animals. It may also be useful in the development of repellents or the like, aimed at controlling the behaviour of animals.

The device of the invention is also considered to be useful in a domestic setting. For example, odourant material may be placed in the odour chamber to attract domestic animals to their food. This may be particularly useful in introducing a new type of food, or encouraging an animal to eat a food it would ordinarily find unpalatable, such as a food containing a medicament.

Thus, a further aspect of the invention provides use of a device according to the above aspects of the invention for feeding an animal in a domestic setting.

Throughout the description and claims of this specification, the words "comprise" and "contain" and variations of the words, for example "comprising" and "comprises", mean "including but not limited to", and do not exclude other components, Integers or steps. Moreover the singular encompasses the plural unless the context otherwise requires: in particular, where the indefinite article is used, the specification is to be understood as contemplating plurality as well as singularity, unless the context requires otherwise.

Preferred features of each aspect of the invention may be as described in connection with any of the other aspects. within the scope of this application it is expressly intended that the various aspects, embodiments, examples and alternatives set out in the preceding paragraphs, in the claims and/or in the following description and drawings, and in particular the individual features thereof, may be taken independently or in any combination. That Is, all embodiments and/or features of any embodiment can be combined in any way and/or combination, unless such features are Incompatible.

### BRIEF DESCRIPTION OF THE DRAWINGS

One or more embodiments of the invention will now be described, by way of example only, with reference to the accompanying drawings (not shown to scale), in which:
Figure 1 is a cross-sectional view of a device according to an embodiment of the invention; and
Figure 2 is a top view of a separating module used In the device of Figure 1.

### DETAILED DESCRIPTION

It will be apparent to one skilled in the art that the specific details are not necessarily required In order to practice the invention. The following descriptions of specific embodiments of the present invention are presented for purposes of Illustration and description. They are not intended to be exhaustive of or to limit the invention to the precise forms disclosed. Obviously, many modifications and variations are possible in view of the above teachings. The embodiments are shown and described in order to best explain the principles of the invention and its practical applications, to thereby enable others skilled in the art to best utilize the invention and various embodiments with various modifications as are suited to the particular use contemplated.

### Example 1

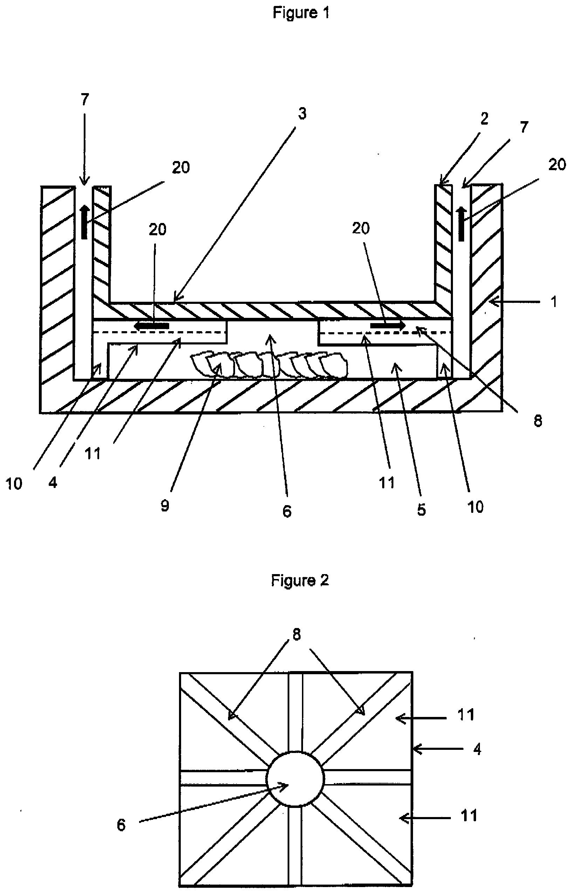

The device of the invention Illustrated in Figure 1 comprises an outer container (1) which is able to accommodate an inner feeding bowl (2). The inner feeding bowl (2) has a solid base (3). It is positioned on top of a separating module (4) (shown best in Figure 2) which defines a cavity (5) which may define an odour chamber that can contain an odourant material (9). Although odorant material (9) is shown in FIG. 1 as being a solid material, it is to be understood that liquid odorant materials may be used.

An opening (6) is provided in the upper surface of the separating module (4). In addition, a plurality of channels (8) are provided in the upper surface of the module (4) which radiate outwards to the edges of the module (4) (Figure 2). Odours can travel from the cavity (5) into the opening (6), and from there into each of the channels (8). The channels (8) are separated by supporting regions (11). The channels (8) comprise regions of reduced thickness as compared to the supporting regions (11).

The inner bowl (2) is positioned on top of the module (4) so that the solid base (3) covers the opening (6). In this position, there is a gap (7) between the side walls of the inner bowl (2) and the inner surface of the outer container (1). The upper surface of the inner bowl (2) and the outer container (1) are approximately level with each other. The channels (8) each extend from the opening (6) to the gap (7) to provide fluid communication between the cavity (5) (odour chamber) and the gap (7).

The combination of the opening (6), the channels (8) and the gap (7) provides a vent, allowing odours formed within the cavity (5) to emanate from around the upper edges of the device. Arrows (20) indicate the path of odours emanating from the odourant material 9.

In the Illustrated embodiments the separating module (4) has supporting legs (10) that raise the opening (6) and channels (8) above the floor of the outer container (1). However, in other embodiments the separating module (4) may have no supporting legs, but may instead be supported directly on the supporting regions (11). In such embodiments the cavity (5) is defined by the opening (6).

In use, an odourant material (9) is positioned within the cavity (5) and food, in particular a known amount of food, is placed in the bowl (2). This is then presented to an animal. The animal may be attracted to or repelled by the food as a result, at least in part due to the odour emanating from around the edges of the device.

The amount of food eaten may provide at least a preliminary indication of the level of attraction from the odour. In addition, the behaviour and physiology of the animal may be monitored on the micro and/or macro level using techniques and monitoring devices known in the art.

In a domestic setting, the odour emanating from the odour chamber may, for example, attract an animal to its food, or otherwise act to influence the animal. For example, this may be particularly useful in introducing a new type of food, or encouraging an animal to eat a food it would ordinarily find unpalatable, such as a food containing a medicament.

After use, the device may be disassembled for washing and reuse.

## Claims

1. A device comprising:
an outer container (1);
an inner feeding bowl (2) for containing food to be consumed by an animal, the inner feeding bowl (2) having side walls and a solid base (3) and being accommodatable in said outer container (1);
an odour chamber for holding odourant material (9) arranged below the inner feeding bowl (2) within the outer container (1);
and a vent arranged to allow odours from the chamber to exit the device between the outer container (1) and the side walls of the inner feeding bowl (2);
wherein the odour chamber comprises a separating module (4), arranged to fit between the base of the inner feeding bowl (2) and the outer container (1); the separating module (4) comprising side walls and an upper surface defining a cavity (5), for surrounding an odourant material (9), wherein at least one opening (6) is provided in the separating module (4).

2. A device according to claim 1 wherein the vent is arranged to direct odour around the bowl.

3. A device according to claim 1 or claim 2 wherein the vent comprises a gap (7) arranged between the outer container (1) and the side walls of the inner feeding bowl (2) which gap (7) extents around the entire rim of the inner feeding bowl (2).

4. A device according to claim 3, wherein the vent comprises a plurality of channels (8) providing fluid communication between the odour chamber and the gap (7), the channels (8) being arranged to each interconnect with the gap (7) at a different location around a periphery of the inner feeding bowl (2).

5. A device according to any preceding claim wherein the outer container (1) and the inner feeding bowl (2) are of similar shape, but the cross-sectional area of the inner feeding bowl (2) is smaller than that of the outer container (1), so that it may sit within the outer container (1), leaving a gap therebetween.

6. A device according to claim 5 wherein the gap (7) is of constant size around the entire container and bowl.

7. A device according to claim 5 or claim 6 wherein the gap (7) between the inner bowl (2) and the outer container (1) is from 1-12mm wide.

8. A device according to any preceding claim wherein the top of the inner bowl (2) is approximately level with the top of the outer container (1).

9. A device according to any preceding claims wherein the separating module (4) is provided with an opening (6) in the upper surface, and wherein at least one channel (8) extends from said opening (6) to an edge region of the upper surface of the separating module (4) to link with the vent.

10. A device according to any preceding claims wherein a plurality of channels (8) are provided in the upper surface of the separating module (4), each channel (8) leading to different points around the edge of the separating module (4).

11. A device according to claim 10 wherein the channels (8) are arranged to allow even distribution of odours into the vent around the entire circumference of the inner bowl (2) and outer container (1).

12. A method for testing the attractiveness of an odourant material (9) to an animal, said method comprising placing the odourant material (9) in the odour chamber of a device according to any one of the preceding claims, placing food in the inner bowl (2), allowing an animal to access the bowl, and assessing a reaction of the animal.

13. A method according to claim 12, wherein a known amount of food is placed in the inner bowl (2) and the amount of food eaten by the animal is determined to assess the reaction.

14. Use of the device of any of claims 1 to 11 for feeding an animal in a domestic setting.

## Patentansprüche

1. Vorrichtung, umfassend:
einen äußeren Behälter (1),
eine innere Futterschüssel (2) zur Aufnahme von Futter,
das von einem Tier zu verzehren ist, wobei die innere Futterschüssel (2) Seitenwände und eine massive Basis (3) hat und in dem äußeren Behälter (1) aufgenommen werden kann,
eine Duftkammer zur Aufnahme von duftendem Material (9),
das unter der inneren Futterschüssel (2) in dem äußeren Behälter (1) angeordnet ist,
und eine Abzugsöffnung, die so angeordnet ist, dass Düfte aus der Kammer zwischen dem äußeren Behälter (1) und den Seitenwänden der inneren Futterschüssel (2) aus der Vorrichtung austreten können,
wobei die Duftkammer ein Trennmodul (4) umfasst, das so angeordnet ist, dass es zwischen die Basis der inneren Futterschüssel (2) und den äußeren Behälter (1) passt, wobei das Trennmodul (4) Seitenwände und eine obere Fläche umfasst, die einen Hohlraum (5) definiert, um ein duftendes Material (9) zu umgeben, wobei mindestens eine Öffnung (6) in dem Trennmodul (4) vorgesehen ist.

2. Vorrichtung nach Anspruch 1, wobei die Abzugsöffnung so angeordnet ist, dass sie Duft um die Schüssel herum lenkt.

3. Vorrichtung nach Anspruch 1 oder Anspruch 2, wobei die Abzugsöffnung einen zwischen dem äußeren Behälter (1) und den Seitenwänden der inneren Futterschüssel (2) angeordneten Spalt (7) umfasst, der sich um den gesamten Rand der inneren Futterschüssel (2) erstreckt.

4. Vorrichtung nach Anspruch 3, wobei die Abzugsöffnung eine Vielzahl von Kanälen (8) umfasst, die für eine Fluidverbindung zwischen der Duftkammer und dem Spalt (7) sorgen, wobei die Kanäle (8) so angeordnet sind, dass sie an einem anderen Ort um einen Umfang der inneren Futterschüssel (2) herum mit dem Spalt (7) verbunden sind.

5. Vorrichtung nach einem der vorhergehenden Ansprüche, wobei der äußere Behälter (1) und die innere Futterschüssel (2) eine ähnliche Form haben, aber die Querschnittsfläche der inneren Futterschüssel (2) kleiner als die des äußeren Behälters (1) ist, so dass sie in dem äußeren Behälter (1) unter Einhaltung eines Spalts zu diesem sitzen kann.

6. Vorrichtung nach Anspruch 5, wobei der Spalt (7) eine konstante Größe um den gesamten Behälter und um die gesamte Schüssel herum hat.

7. Vorrichtung nach Anspruch 5 oder Anspruch 6, wobei der Spalt (7) zwischen der inneren Schüssel (2) und dem äußeren Behälter (1) ab 1 - 12 mm breit ist.

8. Vorrichtung nach einem der vorhergehenden Ansprüche, wobei die Oberseite der inneren Schüssel (2) auf ungefähr demselben Niveau wie die Oberseite des äußeren Behälters (1) liegt.

9. Vorrichtung nach einem der vorhergehenden Ansprüche, wobei das Trennmodul (4) mit einer Öffnung (6) in der oberen Fläche versehen ist und wobei sich mindestens ein Kanal (8) von der Öffnung (6) zu einem Randbereich der oberen Fläche des Trennmoduls (4) erstreckt, um eine Verbindung zu der Abzugsöffnung herzustellen.

10. Vorrichtung nach einem der vorhergehenden Ansprüche, wobei eine Vielzahl von Kanälen (8) in der oberen Fläche des Trennmoduls (4) vorgesehen sind, wobei jeder Kanal (8) zu verschiedenen Punkten um den Rand des Trennmoduls (4) herum führen.

11. Vorrichtung nach Anspruch 10, wobei die Kanäle (8) so angeordnet sind, dass sie eine gleichmäßige Verteilung von Düften in die Abzugsöffnung um den gesamten Umfang der inneren Schüssel (2) und des äußeren Behälters (1) herum gestatten.

12. Verfahren zum Testen der Attraktivität eines duftenden Materials (9) für ein Tier, wobei das Verfahren umfasst, dass das duftende Material (9) in die Duftkammer einer Vorrichtung nach einem der vorhergehenden Ansprüche platziert wird, Futter in die innere Schüssel (2) platziert wird, dem Tier Zugang zu der Schüssel gewährt wird und eine Reaktion des Tiers beurteilt wird.

13. Verfahren nach Anspruch 12, wobei eine bekannte Futtermenge in die innere Schüssel (2) platziert wird und die von dem Tier verzehrte Futtermenge bestimmt wird, um die Reaktion zu beurteilen.

14. Verwendung der Vorrichtung nach einem der Ansprüche 1 bis 11 zum Füttern eines Tiers in einer häuslichen Umgebung.

## Revendications

1. Dispositif comprenant :
un récipient externe (1) ;
un bol d'alimentation interne (2) pour contenir de la nourriture destinée à être consommée par un animal, le bol d'alimentation interne (2) ayant des parois latérales et une base pleine (3) et pouvant être reçu dans ledit récipient externe (1) ;
un compartiment d'odeur pour contenir une matière odorante (9) disposé sous le bol d'alimentation interne (2) à l'intérieur du récipient externe (1) ;
et un évent disposé pour permettre à des odeurs provenant du compartiment de sortir du dispositif entre le récipient externe (1) et les parois latérales du bol d'alimentation interne (2) ;
le compartiment d'odeur comprenant un module de séparation (4), prévu pour s'insérer entre la base du bol d'alimentation interne (2) et le récipient externe (1) ;
le module de séparation (4) comprenant des parois latérales et une surface supérieure définissant une cavité (5), pour entourer une matière odorante (9), au moins une ouverture (6) étant prévue dans le module de séparation (4).

2. Dispositif selon la revendication 1, l'évent étant disposé pour diriger l'odeur autour du bol.

3. Dispositif selon la revendication 1 ou la revendication 2, l'évent comprenant un espace (7) disposé entre le récipient externe (1) et les parois latérales du bol d'alimentation interne (2), ledit espace (7) s'étendant autour de tout le rebord du bol d'alimentation interne (2).

4. Dispositif selon la revendication 3, l'évent comprenant une pluralité de canaux (8) assurant une communication fluidique entre le compartiment d'odeur et l'espace (7), les canaux (8) étant prévus pour être chacun reliés à l'espace (7) à un emplacement différent autour de la périphérie du bol d'alimentation interne (2) .

5. Dispositif selon l'une quelconque des revendications précédentes, le récipient externe (1) et le bol d'alimentation interne (2) ayant une forme similaire, mais la section transversale du bol d'alimentation interne (2) étant plus petite que celle du récipient externe (1), de sorte qu'il puisse se loger dans le récipient externe (1), en laissant un espace entre eux.

6. Dispositif selon la revendication 5, l'espace (7) ayant une taille constante autour de l'entièreté du récipient et du bol.

7. Dispositif selon la revendication 5 ou la revendication 6, l'espace (7) entre le bol interne (2) et le récipient externe (1) étant de 1 à 12 mm de large.

8. Dispositif selon l'une quelconque des revendications précédentes, la partie supérieure du bol interne (2) étant approximativement de niveau avec la partie supérieure du récipient externe (1).

9. Dispositif selon l'une quelconque des revendications précédentes, le module de séparation (4) étant pourvu d'une ouverture (6) dans la surface supérieure, et au moins un canal (8) s'étendant depuis ladite ouverture (6) vers une région de bord de la surface supérieure du module de séparation (4) pour se lier à l'évent.

10. Dispositif selon l'une quelconque des revendications précédentes, une pluralité de canaux (8) étant prévus dans la surface supérieure du module de séparation (4), chaque canal (8) menant à différents points autour du bord du module de séparation (4).

11. Dispositif selon la revendication 10, les canaux (8) étant disposés pour permettre une distribution uniforme des odeurs dans l'évent autour de toute la circonférence du bol interne (2) et du récipient externe (1).

12. Procédé de test de l'attractivité d'une matière odorante (9) pour un animal, ledit procédé comprenant le fait de placer la matière odorante (9) dans le compartiment d'odeur d'un dispositif selon l'une quelconque des revendications précédentes, le fait de placer de la nourriture dans le bol interne (2), le fait de permettre à un animal d'accéder au bol, et le fait d'évaluer une réaction de l'animal.

13. Procédé selon la revendication 12, une quantité connue de nourriture étant placée dans le bol interne (2) et la quantité de nourriture ingérée par l'animal étant déterminée pour évaluer la réaction.

14. Utilisation du dispositif selon l'une quelconque des revendications 1 à 11 pour nourrir un animal dans un cadre domestique.
